(19) Europäisches Patentamt
European Patent Office
Office européen des brevets

(11) **EP 1 974 918 A2**

(12) **EUROPÄISCHE PATENTANMELDUNG**

(43) Veröffentlichungstag:
**01.10.2008 Patentblatt 2008/40**

(51) Int Cl.:
***B41F 23/04*** *(2006.01)*   ***B41F 33/16*** *(2006.01)*

(21) Anmeldenummer: **08004996.8**

(22) Anmeldetag: **18.03.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **28.03.2007 DE 102007015365**

(71) Anmelder: **manroland AG**
**63075 Offenbach (DE)**

(72) Erfinder:
• **Casagrande, Magdalena-Elena**
**81667 München (DE)**
• **Leeratanaphanit, Sarayut**
**63067 Offenbach (DE)**
• **Walther, Thomas**
**63067 Offenbach (DE)**

(74) Vertreter: **Stahl, Dietmar**
**manroland AG**
**Intellectual Property (IPB)**
**Postfach 10 12 64**
**63012 Offenbach am Main (DE)**

(54) **Verfahren zur Bestimmung des Härtungsgrades oder Trockengrades von Druckfarben- und Lackschichten in Druckmaschinen**

(57) Zur effizienteren und energiesparenden Trocknung von Druckfarben oder Lackschichten in Druckmaschinen soll das Trocknungs- bzw. Härtungsverfahren besser überwacht werden.

Vorgeschlagen wird daher ein Verfahren zur Bestimmung des Härtungs- oder Trocknungsgrades einer oder mehrerer gedruckter Druckfarben- und/oder Lackschicht/en auf einem Substrat, das im Tief-, Flexo- oder Offsetdruckes beschichtet wurde. Der Härtungs- bzw. Trocknungsgrad wird dazu indirekt über die Veränderung der mechanischen und/oder viskoelastischen Eigenschaften der Druckfarben und/oder Lackschichten auf dem Substrat durch den Härtungs- bzw. Trocknungsvorgang bestimmt. Hierfür kommt ein Ultraschall-Messverfahren zur Anwendung. Die Messung erfolgt sowohl vor, als auch nach dem Durchgang durch einen Trockner, wobei die erfassten und analysierten Werte verglichen werden.

**EP 1 974 918 A2**

**Beschreibung**

Die Erfindung betrifft ein Verfahren zur Prüfung des Härtungsgrades von in einem der Massendruckverfahren Offset-, Flexo- oder Tiefdruck gedruckten Druckfarben-oder Lackschichten.

Die Härtung bzw. Trocknung von Druckfarbenoder Lackschichten kann einmal durch Verdampfung von Lösungsmitteln oder durch das Wegschlagen von Lösungsmitteln in den Bedruckstoff erfolgen. Weiterhin kann die Härtung bzw. Trocknung durch Oxidation erfolgen. Schließlich kann die Härtung bzw. Trocknung auch durch Polymerisation mit Hilfe von UV- oder Elektronenstrahltrocknern erfolgen oder sie wird durch Verfahrenskombinationen aus den genannten Trocknungsmechanismen ausgeführt.

Für eine Kontrolle der Durchhärtung von Druck- und Lackschichten sprechen viele Faktoren. Eine ausreichende Trocknung und Härtung der verdruckten Druckfarben bzw. Lacke ist Voraussetzung für qualitativ hochwertige Drucke. Innerhalb des Förderwegs der Bogen durch die Maschine können Berührungen der frisch bedruckten oder lackierten Bogenoberfläche zu Beschädigungen hervorrufen, was Makulatur (Ausschuss) bedingt. Die in der Auslage einer Bogendruckmaschine oder aufgerollte Rollenbahnen einer Rollendruckmaschine müssen hinsichtlich der aufgedruckten Druckfarben bzw. Lacke ausreichend getrocknet sein, das sie sonst beim Abstapeln bzw. aufrollen verschmieren und verblocken würden. Gerade letzteres würde eine Weiterverarbeitung der Druckprodukte erschweren bzw. gänzlich unmöglich machen.

An die Einstellung der unterschiedlich aufgebauten Trocknereinrichtungen sind während des Druckprozesses hohe Anforderungen zu stellen. Bereits beim Einrichten der Druckmaschine hat der Bediener Einstellungen an den Trocknereinrichtungen vorzunehmen, um nach möglichst kurzer Zeit und Anzahl von Makulaturbogen (Vorlaufmakulatur) die erforderliche Qualität produzieren zu können. Eine zu hohe Einstellung der Trocknerleistung bedingt nicht nur einen hohen Energieverbrauch der Druckmaschine und eine hohe Abwärmeleistung, die die Temperatur des Drucksaales erhöht bzw. durch die Klimatisierung zu beseitigen wäre, sondern auch der Druckprozess selbst wird negativ beeinflusst. Bekanntlich ändern sich Zügigkeit und Viskosität von Druckfarben bzw. Lacken, so dass eine starke Maschinenerwärmung neben der Erwärmung von Druckfarbe und Dosiereinrichtung häufig wieder Makulatur verursachende Nachregelungen erforderlich machen. Zu niedrige Einstellungen für Trocknerwirkung bzw. Trocknerleistung sind zu vermeiden, da sonst die geschilderte Gefahr des Verschmierens frisch bedruckter Bogen während des Bogentransportes bzw. in der Auslage besteht.

Durch eine Trocknersteuerung ist neben einer Makulaturreduzierung auch eine erhebliche Energieeinsparung möglich. Da die Trocknereinrichtungen nur noch mit der Leistung gefahren werden, welche entsprechend den aktuellen Gegebenheiten erforderlich sind, wird die Stromaufnahme der Einrichtungen auf den jeweilig erforderlichen Wert reduziert. Da die Trocknereinrichtungen auch Abwärme produzieren, ergibt sich auch eine verringerte Aufheizung von Maschinenelementen bzw. der gesamten Maschine. Dadurch wird auch die Lebensdauer der Maschine bzw. von Maschinenkomponenten erhöht. Letztlich vermeidet eine reduzierte Leistung der Trockner auch eine Erhöhung der Drucksaaltemperatur. Bei einem klimatisierten Drucksaal gibt dies ebenfalls eine Energieeinsparung.

Besondere Probleme ergeben sich für den Druck strahlenhärtender Druckfarben und Lacke, die in Druckmaschinen eine Härtungskontrolle erforderlich machen. Der Druck mit strahlenhärtenden Offsetdruckfarben hat in der heutigen Druckindustrie eine weite Verbreitung gefunden. Vorteile des Drucks mit den strahlenhärtenden Druckfarben liegen in der schnellen, spontanen Vernetzung nach der Bestrahlung mit einer UV-Strahlungsquelle, der Lösungsmittelfreiheit der Druckfarben und der guten Bedruckbarkeit von nicht saugenden Substraten (z.B. Folien).

Konventionelle Druckfarben sind dagegen entweder ölbasierend oder lösemittelhaltig. Ölbasierende Druckfarben trocknen durch die Oxidation der Bindemittel auf Ölbasis oder trocknen durch Verdampfen der in der Druckfarbe befindlichen leichtflüchtigen Öle (Heat-Set-Verfahren). Strahlenhärtende Druckfarben und Lacke härten dagegen durch einen fotochemischen Prozess, der auch als Vernetzung bezeichnet wird. Der flüssige oder unvernetzte Druckfarbenfilm wird durch die Polymerisation unter Einwirkung von UV-Licht in einen festen Zustand überführt.

Es sind aber Fehler bekannt, bei denen unvernetzte Druckfarbenbestandteile durch Abklatsch im Auslegerstapel einer Bogendruckmaschine oder durch Abklatsch in einer Rolle nach dem Druck auf die Rückseite des darüber befindlichen Substrats übertragen wurden. Auch können Druckfarbenbestandteile durch den Bedruckstoff hindurch migrieren. Eine Migration von Druckfarbenbestandteilen oder ein Abklatsch von Druckfarben kann bei Verpackung zu einer sensorischen Beeinflussung des Füllgutes führen. Bei Überschreiten von spezifischen Migrationlimits kann im Falle einer Verpackung für Lebensmittel eine gesundheitliche Beeinträchtigung des Konsumenten nicht ausgeschlossen werden. Bei Überschreiten der spezifischen Migrationlimits müssen Verpackungen auf jeden Fall aus dem Verkehr gezogen werden, was neben dem finanziellen Folgen meist auch ein Verlust der Reputation des Markenherstellers im Markt zur Folge hat. Die Wahrung der gesundheitlichen Unbedenklichkeit ist vorrangig. Laut § 30 LMBG ist es verboten Bedarfsgegenstände so herzustellen, dass sie bei bestimmungsgemäßen Gebrauch geeignet sind, die Gesundheit durch ihre stoffliche Zusammensetzung, insbesondere durch toxikologisch wirksame Stoffe oder Verunreinigungen zu schädigen. Zudem gilt nach deutschem und europäischem Recht und ebenso in den USA das "No-Migration-Prinzip", d.h. ein Übergang von Stoffen auf das verpackte Lebensmittel ist zu vermeiden. Es ist also besonders wichtig die Vernetzung der strahlenhärtenden Druckfarbe auf dem Bedruckstoff sicher zu stellen.

Eine nicht ausgehärtete strahlenhärtende Druckfarbe oder Lack hat aber auch Auswirkungen auf die Sicherheit des Bedienpersonals. Sind strahlenhärtende Druckfarben- oder Lackschichten auf dem Bedruckstoff nicht richtig durchgehärtet und der Bediener zieht ein Probeexemplar, z. B. zur Kontrolle der Druckqualität, dann können migrationsfähige Bestandteile der Druckfarben über die Haut aufgenommen werden. Neben gesundheitlicher Gefährdung können auch Reizungen und allergische Reaktionen der Haut entstehen. Weiterhin entstehen durch nicht ausgehärtete Lacke und Druckfarben zusätzliche Entsorgungskosten, da Druckbögen mit unvernetzten Druckfarben- oder Lackbestandteilen in der Regel als Sonderabfall behandeln werden. Dies erfordert einen logistischen Mehraufwand und erzeugt in der Regel Mehrkosten für die Entsorgung.

Daher spricht viel dafür, die Härtung bzw. Trocknung von Druckfarben- und Lackschichten auf dem Bedruckstoff zu messen, Messgrößen zu bilden und diese dann direkt oder über Bedienereingabe zur Steuerung der Trockner heranzuziehen. Zusätzlich können aus diesen Messwerten Qualitätsprotokolle abgeleitet werden, so dass der Nutzer einen Nachweis erhält, dass die Druckfarbe oder der Lack ausreichend ausgehärtet sind. Dies wird gerade in Verbindung mit strahlenhärtenden Druckfarben und Lacken aus Gründen der Produktsicherheit oftmals gefordert.

Der Wunsch die Härtung bzw. Trocknung von Druckfarben- oder Lackschichten zu bewerten wurde häufig diskutiert. In der EP 1 142 711 B1 wird z. B. vorgeschlagen, eine Steuerung für eine Trocknereinrichtung vorzusehen, der mindestens ein Signal einer den Druckprozess charakterisierenden Größe zugeführt wird. Infolgedessen können durch die Steuerung Signale generiert werden, durch welche die Betriebsweise der Trocknereinrichtung in vorgesehener Weise verändert wird. Es wird auch vorgeschlagen die Steuerung der Trocknervorrichtung anhand von am Bedruckstoff gemessenen Messwerten vorzunehmen. Als Messgrößen werden die Lack- bzw. Farbschichtdicke oder der Glanz des Lackauftrags angeführt.

Die DE 197 37 785 A1 schlägt vor den Trocknungsgrad einer Lackschicht durch das Messen der Intensität eines Mikrowellensignals, das in einer Wechselwirkung mit dem lackierten Bedruckstoff in Wechselwirkung steht zu bestimmen. Die aus dem Messsignal gebildete Zustandsgröße kann dann als Regelgröße für die Trocknersteuerung herangezogen werden. Das Verfahren eignet sich aber nur für den Einsatz von Beschichtungsmedien, die Mikrowellenenergie stark absorbieren, wie z. B. Dispersionslack mit Wasser als Lösemittel. Die Prüfung der Polymerisation von gehärteten Druckfarben- und Lackschichten wird nicht erwähnt.

Die DE 24 58 935 A1 offenbart ein Mess- und Regelverfahren der Geschwindigkeit von Druck- und Beschichtungsmaschinen, bei dem kontinuierlich auf der Papierbahn die den benutzten Lösemitteln entsprechenden Wellenlängen analysiert werden, wobei die nach dem Trocknen gemessenen Durchschnittswerte mit den voreingestellten Maximalwerten vergleicht. Die Messeinrichtung besteht dabei aus einem Analysatorkopf mit kontinuierlicher Ausstrahlung, einem Empfänger zur Aufnahme der Strahlung, die das zu analysierende Produkt reflektiert oder durchfiltert. Nachteilig ist, dass von vornherein die Lösemittelzusammensetzung bekannt sein muss. Bei Druckverfahren mit einfacher Lösemittelzusammensetzung ist das relativ einfach. Bei modernen Druckfarben mit einer Vielzahl von Lösemitteln ist es schwierig, da die Zusammensetzung der Druckfarbe oft nur grob angegeben wird. Das Verfahren versagt bei Druckfarben, die keine Lösemittel emittieren, also bei strahlenhärtenden, oxidativ und wegschlagend trocknenden Druckfarben. Das Messverfahren ist nicht universell und auch nicht bei schnell laufenden Druckmaschinen anwendbar, da die Analyse zeitintensiv und komplex ist.

Im Labor werden Infrarotspektroskopie oder Raman-Spektroskopie für die Beurteilung der Polymerisation eingesetzt. Diese Methoden sind wegen ihrer Komplexität und Probenvorbereitung kaum für den Einsatz im rauen Maschinenumfeld einer Druckerei geeignet, aber prinzipiell anwendbar. Daher wurde überlegt, den Grad der Polymerisation aus der Veränderung von physikalisch-mechanischen Eigenschaften der Druckfarben- und Lackschicht abzuleiten. Eine Möglichkeit ist die Bestimmung des Gleitreibungskoeffizienten der Oberfläche, der sich mit zunehmenden Polymerisationsgrad verändert. Nachteil der Methode ist, dass sie nur auf der Oberfläche wirkt und die Tiefenhärtung nur annähernd bestimmt werden kann. Außerdem ist die Gleitreibungsmessung ein berührendes Messverfahren, das zu Beschädigungen auf der Druckfarben- bzw. Lackoberfläche führen kann.

Ultraschallmessungen sind in der Druckindustrie als Messverfahren bekannt. Testmethoden mit Ultraschall haben den Vorteil, dass sie weder invasiv, noch destruktiv wirken, wenn Eigenschaften eines Materials zu bestimmen sind.

Während der Polymerisationsprozesses, der durch UV-Bestrahlung induziert wird, steigt die mechanische Festigkeit des Materials der Druckfarben- bzw. Lackschicht mit dem Aushärtungsgrad an. Diese Festigkeitssteigerung kann durch die Aufzeichnung von eingeleiteten Ultraschallpulsen beobachtet werden, indem die Ausbreitungsgeschwindigkeit der Ultraschallwellen als Funktion der Zeit durch das Material bzw. durch die Druckfarben- bzw. Lackschicht aufgenommen wird.

Die Ausbreitungsgeschwindigkeit v des Ultraschalls in flüssigen Medien hängt von deren Dichte und adiabatischer Kompressibilität über folgende Beziehung an:

$$v = \frac{1}{\rho \beta_{ad}}$$

$v$ = Schallgeschwindigkeit
$\rho$ = Dichte
$\beta_{ad}$ = adiabatische Kompressibilität

Da sowohl die Dichte als auch die Kompressibilität temperaturabhängige, stoffspezifische Konstanten sind, breitet sich der Schall in jedem Stoff je nach Temperatur mit einer charakteristischen Geschwindigkeit aus. Die Schallgeschwindigkeit wird dabei durch die Struktur des Stoffes bestimmt, d.h. durch Atom- und Molekülgruppen, Isomerien oder Kettenlängen. Dieser Zusammenhang bietet damit die Möglichkeit, Stoffe mittels Ultraschall zu charakterisieren.
Für Monomer-Polymersysteme gilt ganz allgemein, dass die auftretenden Unterschiede der Schallgeschwindigkeit zwischen Monomer und Polymer in erster Linie durch die Kettenlänge und den Grad von Verzweigungen und Vernetzungen bestimmt werden.
In Mehrkomponentensystemen hängt die Schallgeschwindigkeit ab von:

- der Schallgeschwindigkeit der Einzelkomponenten
- dem Zustand bzgl. Temperatur und Druck
- der Wechselwirkung der Stoffe untereinander

Die Zusammensetzung der Mehrkomponentensysteme ist damit grundsätzlich bestimmbar, Voraussetzung ist die Kenntnis aller Einflussfaktoren.
Ein Ansatz die Festigkeit von Papierbahnen zu überprüfen, ist die Messung der Ausbreitungsgeschwindigkeit und -intensität von Schallwellen in der Bahn. In der DE 30 45 581 A1 wird ein Verfahren zur zerstörungsfreien Untersuchung von Papier bei der Herstellung in einer fortlaufenden, sich schnell bewegenden Bahn beschrieben. Dabei wird ausgenutzt, dass viele Festigkeitsparameter von Papier in einer Beziehung zu einem Elastizitätsmodul stehen. Dieses kann mit der Geschwindigkeit von Schallwellen in Beziehung gesetzt werden, die sich durch die Papierbahn fortpflanzen. Ein Schallgeber (Wandler) sendet ein Signal zum Papier und ein Empfänger empfängt das Ultraschallsignal vom Papier. Aus der Zeit der Fortpflanzung des Ultraschalls durch das Papier und der Entfernung, die dabei zurückgelegt wird, wird die Geschwindigkeit der Ultraschallwellen berechnet. Die Wandler sind in Rädern angeordnet, die auf der Papierbahn aufsitzen. Die hohen Anforderungen an die Synchronisation der Räder mit den Wandlern macht die Erfindung nicht sehr praktikabel. Eine solche Messung erscheint auf bedrucktem Papier durch die Berührung zusätzlich erschwert.
Wünschenswert wäre daher eine Messung, bei der eine nicht berührende Einkoppelung von Schallwellen erfolgt. Die DE 103 18 104 A1 schlägt als berührungslose Messung der Lappigkeit einer Banknote vor, diese mit Schallwellen zu bestrahlen, die von dem Blattgut ausgehende Schallwellen zu erfassen, wobei transmittierte und reflektierte Schallwellen erfasst werden und daraus Werte für die Lappigkeit des Blattgutes abgeleitet werden, die unabhängig von dem Verschmutzungsgrad der Banknote sind. Der Nachteil der gefundenen Lösung besteht unter anderem darin, dass die Schallempfänger an beiden Seiten des Papiers angeordnet sind. Außerdem werden nur transmittierte oder reflektierte Schallwellen bewertet, die Fortpflanzung der Schallwellen an der Oberfläche wird nicht berücksichtigt.
Ultraschall wird auch zur Messung von Farbschichtdicken auf Walzen und Bedruckstoff eingesetzt. Die DE 43 18 445 B4 beschreibt ein Verfahren, wo die Schichtdicke einer Farbe aufgrund der Differenzlaufzeiten bestimmt wird.
Aufgabe der Erfindung ist es daher die Aushärtung bzw. Trocknung von Lack- und Druckfarbenschichten auf Papier-, Folien-, oder Kartonbedruckstoffen genauer zu erfassen, wobei eine konkrete Aussage über den Härtungs- oder Trocknungsgrad der Lack- oder Druckfarbenschichten erfolgen soll.
Diese Aufgabe wird gelöst durch die Merkmale des Anspruchs 1.
Sinnvolle Weiterbildungen ergeben sich aus den Unteransprüchen.
Eine Aussage über den Härtungs- oder Trocknungsgrad wird erfindungsgemäß durch einen Vergleich von physikalischen und/oder chemischen Eigenschaften der Druckfarben- oder Lackschicht bestimmt, die vor und nach dem Durchgang des Druckbogens durch einen Trockner auf dem Druckbogen gewonnen wurden. Hierbei werden identische oder vergleichbare Messorte verwendet.
In diesem Zusammenhang kann Ultraschall angewendet werden, der mit Hilfe von Wandlern, z. B. piezoelektrische oder magnetoresistive Wandler, in das Material eingebracht werden kann. Ultraschall kann aber auch durch einen Laserimpuls oder durch ein Plasma im Material erzeugt werden.
Laserinduzierte Ultraschallwellen haben viele Vorteile. Sie erfordern keinen Kontakt zu dem zu testenden Material, erlauben schnelle Inspektion und sind nicht destruktiv, wenn die Lichtenergie ausreichend klein gewählt wird. Laserinduzierter Ultraschall kann sehr gut in industrieller Umgebung, wie an Druckmaschinen, eingesetzt werden. Sie sind zwar nicht von dem Kontakt zwischen Material und Signalgeber abhängig, wie z. B. bei Piezowandlern, haben aber den Nachteil gegenüber der klassischen Einkoppelung über Wandler, dass sie teuerer sind und teilweise eine geringere Empfindlichkeit aufweisen.
Der Mechanismus der Ultraschallgenerierung in einem Feststoff lässt sich wie folgend beschreiben. Ein gepulster Laserstrahl wird auf das zu testende Material geleitet und von diesem teilweise absorbiert. Die Lichtenergie, die auf das Material auftrifft, wird in Wärmenergie umgewandelt. Dadurch findet lokal eine sehr schnelle thermische Expansion des Materials statt. Diese führt zur Erzeugung von Ultraschall in dem Medium. Wenn die Lichtenergie ausreichend klein gewählt wird, schmilzt oder ablatiert das Material nicht. Wenn die Lichtenergie groß genug ist und das Material schmilzt, so dass dies zu einer Plasmaerzeugung führt, wird wiederum Ultraschall generiert, der in diesem Fall durch den Momenten-Transfer beim Ablösen des Materials entsteht. Ein derartig ablativer Prozess ist in einem Druckbild nicht akzeptabel, kann aber im Randbereich des Druckbogens, z. B. im Bereich des Kontrollstreifens, der später weggeworfen wird, toleriert werden.

Die Härtung und Trocknung eines Druckfarben- und Lackfilms kann durch Ultraschall beurteilt werden. Die Druckfarbe oder der Lack erfährt bei der Härtung bzw. Trocknung eine deutliche Viskositätsveränderung. Im Fall eines Films aus strahlenhärtenden Druckfarben oder Lacken liegen diese direkt nach der Bestrahlung mit UV-Licht oder Elektronenstrahlen gehärtet vor. Zwischen den Materialeigenschaften und den akustischen Parametern besteht ein enger Zusammenhang. Wenn Ultraschallwellen in eine Druckfarben oder Lackschicht induziert werden, werden längs- und transversal verlaufende Schallwellen durch die Struktur und durch den molekularen Relaxationsprozess beeinflusst. Ultraschallmethoden sind daher gut geeignet mechanische Moduli (Moduln) zu bestimmen.

Das Prinzip ist, eine mechanische Schwingung zu induzieren, die sich über die Oberfläche des zu untersuchende Materials ausbreitet. Die Amplitude der Schwingung fällt in das Material hinein exponentiell ab. Die Eindringtiefe der Welle nimmt weiterhin mit zunehmender Frequenz ab.

In inhomogenen Druckfarben- oder Lackschichten können morphologische Informationen durch Schallstreuung und -reflexion bestimmt werden. Durch diese Methode kann die Zustandsinformation zu einem Film aus Druckfarbe oder Lack über die Änderung der mechanischen Eigenschaften der jeweiligen Druckfarben- oder Lackschichten beobachtet werden.

Gemessen wird in dem Ultraschallverfahren der akustische Reflexionskoeffizient bei der Oberfläche zwischen den Träger und den Druckfilm; das geschieht sowie für transversale wie auch für longitudinale Wellen und das bei unterschiedliche Frequenzen. Dabei werden die Echos der längs- und transversal verlaufenden Schallwellen beobachtet und mittels einer Analysesoftware analysiert.

Messungen der mechanischen Moduli (Moduln) der Druckfarben- oder Lackschichten erfolgen in der Regel bei sehr hohen Frequenzen vom MHz bis zum GHz Bereich. Aber auch die mechanischen Eigenschaften im Tieffrequenzbereich können von Interesse sein. Es können auch Impulse generiert werden, die nicht nur eine Frequenz enthalten. Durch das Nutzen eines breiten, kontinuierlichen Frequenzspektrums können der Erhärtungszustand genau definiert werden, denn je nach Erhärtungszustand werden verschiedene Frequenzanteile unterschiedlich übertragen. Nach der Messung lässt sich das Spektrum durch eine Fouriertransformation analysieren. Daraus lassen sich Frequenz-Zeit- Kurven oder Frequenz-Zeit Flächen ableiten, die eine Interpretation der spektralen Eigenschaften eines Druckfarben- oder Lackfilms als eine Funktion der Zeit darstellen,

Es ist ferner möglich die Messung dadurch zu verbessern, dass die Probe auf ein Material, wie z. B. Glas oder Quarz gelegt wird, das Ultraschall sehr gut reflektiert. Der von dem Material reflektierte Ultraschall hat nach der Reflexion eine geringere Amplitude und ist phasenverschoben. Die Dämpfung und Phasenverschiebung sind wiederum charakteristische Kennzeichen eines Materials.

Ferner ist bekannt, dass sich das viskoelastische Verhalten von Materialien mit der Frequenz des Ultraschalls und der Temperatur der Probe ändert. Diese Einflussgrößen müssen bei der Interpretation der Daten in der Signalanalyse mit berücksichtigt werden.

Die Echos des Ultraschalls können mit Wandlern oder optischen Messgeräten, wie z. B. Interferometer erfasst werden.

Die aus der Messung gewonnenen Daten der mechanischen Moduli (Moduln) der Druckfarben- und Lackschichten können als absolute Messwerte, im Vergleich zu in Datenspeichern eines Expertensystems oder einer Referenzwerttabelle abgelegten Werten oder im Vergleich zu einer Probe mit definierten Aushärtungseigenschaften ausgewertet und bewertet werden. Die Aushärtung bzw. die Trocknung der Druckfarben- und Lackschichten wird dabei bevorzugt in einer Kennzahl zusammengefasst, die es dem Maschinenbediener erlaubt ohne Interpretation von Kurvenverläufen steuernd einzugreifen, um Maschinenparameter, wie Trocknertemperatur, Strahlungsleistung, Maschinengeschwindigkeit etc. an die Prozesserfordernisse anzupassen. Die Anpassung kann auch automatisiert erfolgen, wenn die Ergebnisse der Härtungs- und Trocknungsmessung direkt von der Maschinensteuerung übernommen und dort entsprechende Maßnahmen abgeleitet werden. Im einfachsten Fall erhält der Bediener Einstellungsvorschläge. Im komplexeren Fall werden direkt über Kennlinien, Berechnungsvorschriften oder anhand in einem Expertensystem abgelegten Wissens entsprechende Korrekturmaßnahmen eingeleitet. Dies können im Fall ungenügender Härtung bzw. Trocknung Maßnahmen zu deren Verbesserung sein. Bei ausreichender Trocknung kann auch eine Reduzierung der Trocknerleistung vorgesehen sein, um Energie zu sparen.

Der Ansatz den Härtungs- bzw. Trocknungsgrad durch die Messung der mechanischen Kenngrößen zu bestimmen erlaubt eine Härtungskontrolle, die auch in rauer Druckereiumgebung eingesetzt werden kann. Sie kann dabei Offline, also außerhalb einer Druckmaschine, oder auch Inline, also während der Produktion in der Druckmaschine erfolgen. Mit diesem Ansatz ist es auch erstmals möglich mit einem erträglichen Aufwand ein Produktionsprotokoll mit Statistiken bzw. Kurvenverläufen oder Kennzahlen zu erhalten, die es dem Drucker ermöglicht die ausreichende Trocknung bzw. Härtung und damit die Produktsicherheit gegenüber seinem Endkunden nachzuweisen.

**Patentansprüche**

1. Verfahren zur Bestimmung des Härtungs- oder Trocknungsgrades von gedruckten Druckfarben- und/oder Lackschichten auf einem Substrat, zum Beispiel Papier, Karton, Kunststofffolie oder Verbundmaterialien, das mittels eines der Druckverfahren Tief-, Flexo- oder Offsetdruck bedruckt und anschließend getrocknet wird,
**gekennzeichnet dadurch,**
**dass** der Härtungsgrad bzw. Trocknungsgrad der Druckfarben- und/oder Lackschichten durch Bestimmung physikalischer und/oder mechanischer und/oder chemischer Eigenschaften von auf dem Substrat aufgebrachten Druckfarben- und/oder Lackschichten in einem ersten Zustand bzw. Zeitpunkt vor und in einem zweiten Zustand bzw. Zeitpunkt nach dem Durchgang eines beschichteten Substrates durch einen Trockner ermittelt wird.

2. Verfahren nach Anspruch 1,
**gekennzeichnet dadurch,**
**dass** die Bestimmung der physikalischen und/oder der mechanischen und/oder der chemischen Eigenschaften der Druckfarben- und/oder Lackschicht vor und nach dem Durchgang eines Substrates durch den Trockner durch Messung am selben Messort oder an einem Messort gleicher oder ähnlicher Farb- und/oder Lackbelegung auf dem Substrat erfolgt.

3. Verfahren nach Anspruch 1 oder 2,
**gekennzeichnet dadurch,**
**dass** das Substrat ein Bedruckstoffbogen oder eine Bedruckstoffbahn ist.

4. Verfahren nach Anspruch 1 oder 2,
**gekennzeichnet dadurch,**
**dass** die Bestimmung der Eigenschaften an dem Substrat offline außerhalb der Druckmaschine oder inline innerhalb der Druckmaschine erfolgt.

5. Verfahren nach Anspruch 1 bis 4,
**gekennzeichnet dadurch,**
**dass** in der Druckfarben- und/oder Lackschicht eine Ultraschallschwingung bzw. ein Ultraschallsignal erzeugt wird, und dass das Echo der Ultraschallschwingung bzw. des Ultraschallsignals zur Bestimmung mechanischer und/oder viskoelastischer Eigenschaften der Druckfarben- und/oder Lackschicht ausgewertet wird.

6. Verfahren nach Anspruch 1 bis 4,
**gekennzeichnet dadurch,**
**dass** ein durch piezoelektrische oder magnetoresistive Wandler erzeugtes Ultraschallsignal durch mechanische oder Luftkoppelung in die Druckfarben und/oder Lackschicht eingebracht wird.

7. Verfahren nach Anspruch 1 bis 4,
**gekennzeichnet dadurch,**
**dass** das Ultraschallsignal durch einen Laserstrahl oder Laserpuls in der Druckfarben und/oder Lackschicht erzeugt wird, wobei durch die Wärmeenergie des Laserstrahles bzw. -pulses eine schnelle lokale thermische Expansion der Druckfarben- und/oder Lackschicht stattfindet, die zur Erzeugung von Ultraschall in der Druckfarben- und/oder Lackschicht führt.

8. Verfahren nach Anspruch 1 bis 4,
**gekennzeichnet dadurch,**
**dass** der Ultraschall durch einen Laserstrahl oder Laserpuls in der Druckfarben und/oder Lackschicht erzeugt wird, indem durch die Wärmeenergie ein lokales schmelzen bzw. ablatieren der Druckfarben- und/oder Lackschicht stattfindet und dies zu einer Plasmaerzeugung führt, wobei durch den Momenten-Transfer durch das Ablösen des Materials eine Ultraschallschwingung bzw. ein Ultraschallsignal in der Druckfarben- und/oder Lackschicht generiert wird.

9. Verfahren nach Anspruch 5 bis 8,
**gekennzeichnet dadurch,**
**dass** das in die Druckfarben- und/oder Lackschicht eingebrachte Ultraschallsignal bzw. der eingeleitete Laserimpuls oder das in der Druckfarben-und/oder Lackschicht erzeugte Ultraschallsignal frequenzmoduliert ist.

10. Verfahren nach Anspruch 5 bis 8,
**gekennzeichnet dadurch,**
**dass** das in die Druckfarben- oder Lackschicht eingebrachte oder in der Druckfarben- oder Lackschicht erzeugte Ultraschallsignal bzw. der eingeleitete Laserimpuls intensitäts- und frequenzmoduliert ist.

11. Verfahren nach Anspruch 6 bis 10,
**gekennzeichnet dadurch,**
**dass** die Wellenlänge des Lasers wählbar ist und auf die Absorptionscharakteristik der Druckfarben-/Lackschicht abstimmbar ist.

12. Verfahren nach Anspruch 5 bis 11,
**gekennzeichnet dadurch,**
**dass** durch den Wandler oder die Laserquelle Impulse abgesendet werden, die nur eine Frequenz bzw. Wellenlänge aufweisen.

**13.** Verfahren nach Anspruch 5 bis 11, **gekennzeichnet dadurch,** **dass** durch den Wandler oder die Laserquelle Impulse abgesendet werden, die kontinuierlich oder diskret ein Frequenz- bzw. Wellenlängenspektrum durchlaufen.

**14.** Verfahren nach Anspruch 5 bis 11, **gekennzeichnet dadurch,** **dass** die Echos der Schallwellen in transversaler und/oder longitudinaler Richtung durch geeignete Geber erfasst werden.

**15.** Verfahren nach einem oder allen der Ansprüche 5 bis 14, **gekennzeichnet dadurch,** **dass** die gewonnenen Signale der Geber zur Bestimmung des Härtungs-und des Trocknungsgrads vor und nach dem Durchgang eines Bedruckstoffes durch einen Trockner einer Signalanalyse zugeführt werden, wobei die Signalanalyse die aus der Messung vor und nach dem Durchgang durch den Trockner gewonnenen Werte vergleicht und daraus Kennwerte für den Härtungs- oder Trocknungsgrad gewonnen werden.

**16.** Verfahren nach Anspruch 15, **gekennzeichnet dadurch,** **dass** bei der Signalanalyse die unterschiedlichen Temperaturen der Messorte vor und nach dem Durchgang eines Bedruckstoffes durch einen Trockner bei der Signalanalyse berücksichtigt werden.

**17.** Verfahren nach einem oder allen der vorherigen Ansprüche, **gekennzeichnet dadurch,** **dass** die Temperaturdifferenz vor und nach dem Durchgang eines Bedruckstoffes durch einen Trockner aus den Messwerten der Geber direkt abgeleitet wird.

**18.** Verfahren nach einem oder allen der vorherigen Ansprüche, **gekennzeichnet dadurch,** **dass** die Temperaturen vor und nach dem Durchgang eines Bedruckstoffes durch einen Trockner durch separate Temperatursensoren erfasst werden und diese Temperaturwerte der Signalanalyse zugeführt werden.

**19.** Verfahren nach Anspruch 15 bis 18, **gekennzeichnet dadurch,** **dass** mittels der Signalanalyse ein oder mehrere Kennwerte zur Kennzeichnung des physikalischen Zustandes der getrockneten Druckfarben-und/oder Lackschicht gebildet wird.

**20.** Verfahren nach Anspruch 19,
**gekennzeichnet dadurch,** **dass** der/die mittels Signalanalyse gewonnene Kennwert/-e vorzugsweise eine Prozentangabe des Härtungs- oder Trocknungsgrades ist.

**21.** Verfahren nach Anspruch 15 bis 20, **gekennzeichnet dadurch,** **dass** das Ergebnis der Signalanalyse, vorzugsweise des/der Kennwerte auf einer Anzeigevorrichtung dargestellt wird und dass die Darstellung vorzugsweise mit Handlungsempfehlungen für die Einstellung der Trocknereinrichtung und/oder von Maschinenparametern kombiniert wird.

**22.** Verfahren nach Anspruch 21, **gekennzeichnet dadurch,** **dass** die Ergebnisse am Leitstand einer Druckmaschine ausgebbar sind.

**23.** Verfahren nach Anspruch 15 bis 20, **gekennzeichnet dadurch,** **dass** aus dem Ergebnis der Signalanalyse automatisch Steuersignale für die Veränderung der Einstellung der die Trocknung bzw. Härtung beeinflussenden Prozessparameter, wie Trocknereinstellung, Produktionsgeschwindigkeit etc., gewonnen werden und dass diese an eine oder mehrere Steuereinrichtung weitergegeben werden, wobei die Signalweiterleitung direkt oder nach Bedienerfreigabe erfolgt, um eine Veränderung der Prozessparameter zu vollziehen.

**24.** Verfahren nach einem der vorhergehenden Ansprüche, **gekennzeichnet dadurch,** **dass** die Bestimmung der Veränderung der mechanischen und/oder viskoelastischen und/oder chemischen Eigenschaften der Druckfarben oder Lackschichten auf dem Substrat an strahlenhärtenden Druckfarben oder Lackschichten erfolgt, die mit UV-Strahlung oder Elektronenstrahltrocknung gehärtet wurden.

**25.** Verfahren nach einem der vorhergehenden Ansprüche, **gekennzeichnet dadurch,** **dass** die Bestimmung der Veränderung mechanischer und/oder viskoelastischer und/oder chemischen Eigenschaften der Druckfarben- oder Lackschichten auf dem Substrat an lösemittel- oder wasserhaltigen Druckfarben oder Lacken erfolgt.

**26.** Verfahren nach einem der vorhergehenden Ansprüche, **gekennzeichnet dadurch,** **dass** die Bestimmung der Veränderung der mechanischen und/oder viskoelastischen und/oder chemischen Eigenschaften der Druckfarben auf dem Sub-

**EP 1 974 918 A2**

strat an Druckfarben erfolgt, die oxidativ und /oder in den Bedruckstoff wegschlagend trocknen.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1142711 B1
- DE 19737785 A1
- DE 2458935 A1
- DE 3045581 A1
- DE 10318104 A1
- DE 4318445 B4